# FASCICULE DE BREVET EUROPEEN

(11) **EP 2 704 559 B1**
(45) Date de publication et mention de la délivrance du brevet: **24.02.2016**
(21) Numéro de dépôt: 12718702.9
(22) Date de dépôt: 06.04.2012
(51) Int. Cl.: A01N 1/02

(54) **SOLUTION DE RINCAGE DE GREFFON OU DE TISSU ET PROCEDE DE RINCAGE DUDIT GREFFON OU TISSU AVANT REVASCULARISATION**
TRANSPLANTAT- ODER GEWEBESPÜLLÖSUNG UND VERFAHREN ZUM SPÜLEN DES TRANSPLANTATS ODER GEWEBES VOR DER REVASKULARISATION
GRAFT OR TISSUE RINSING SOLUTION AND METHOD FOR RINSING SAID GRAFT OR TISSUE BEFORE REVASCULARIZATION

(30) Priorité: 02.05.2011 FR 1153745
(43) Date de publication de la demande: 12.03.2014
(73) Titulaire: Groupe IGL, 69380 Lissieu (FR)
(72) Inventeur: LOPEZ, George-Antoine, F-69130 Ecully (FR); RAMELLA VIRIEUX, Silvina, F-69006 Lyon (FR); NET ABRAHAM, Marcos Juan, E-08003 Barcelona (ES)
(74) Mandataire: Cabinet Laurent & Charras
(86) Numéro de dépôt international: PCT/FR2012/050758
(87) Numéro de publication internationale: WO 2012/150392

(56) Documents cités:
- EP-A1- 1 178 726
- EP-A2- 1 997 374
- WO-A1-98/35551
- NEUZILLET ET AL: "Effects of the Molecular Weight of Peg Molecules (8, 20 and 35 KDA) on Cell Function and Allograft Survival Prolongation in Pancreatic Islets Transplantation", TRANSPLANTATION PROCEEDINGS, ELSEVIER INC, ORLANDO, FL; US, vol. 38, no. 7, 1 septembre 2006 (2006-09-01), pages 2354-2355, XP005656116, ISSN: 0041-1345, DOI: 10.1016/J.TRANSPROCEED.2006.06.117

## Description

L'invention a pour objet une solution de rinçage d'organe ou greffon tel que rein, foie, coeur sans que ce soit limitatif mais également de tissus tels que veines, artères, valves, vaisseaux...Elle a également pour objet un procédé de rinçage de greffon ou tissu avant revascularisation.

L'invention est plus particulièrement décrite en relation avec le rinçage du rein au cours d'une procédure de transplantation.

La transplantation rénale est, de loin, la plus fréquente des greffes d'organes. Elle est réalisée chez les personnes en insuffisance rénale terminale. Il s'agit désormais du traitement de choix de l'atteinte rénale du fait qu'elle dépasse la dialyse en termes de qualité de vie des patients.

Les suites d'une transplantation rénale peuvent être émaillées de diverses complications immunologiques et non immunologiques qui peuvent entre autre mettre en jeu le pronostic fonctionnel du greffon. Outre les problèmes posés par le risque de rejet, la néphropathie ischémique présente une complication majeure accompagnant la procédure de transplantation. En effet, toutes les étapes de la transplantation rénale sont autant de circonstances comportant un stress ischémique. La compréhension des évènements physiologiques liés à l'ischémie-reperfusion menant à de possibles thérapies représente donc un enjeu majeur.

Plusieurs stratégies sont mises en place pour prévenir le syndrome d'ischémie-reperfusion en transplantation, entre autre, le refroidissement des greffons (à + 4°C) avec l'utilisation de solutions de conservation et en particulier la solution UW. Cette stratégie, quoi que largement utilisée, présente certains inconvénients. La conservation au froid serait à l'origine de lésions cellulaires et tissulaires. La solution de conservation UW (Université du Wisconsin) de type intracellulaire connue également sous la dénomination BELZER-VIASPAN contient une forte concentration de potassium (125 mM). Or, lors de la période d'ischémie, les greffons libèrent plusieurs catabolites (par exemple, l'endothéline ...). Ils peuvent en outre accumuler de fortes quantités de cet ion (K+) et de ces catabolites, ce qui peut provoquer des lésions chez le receveur lors de la phase de reperfusion. En outre, l'hyperkaliémie du greffon est susceptible de provoquer des troubles du rythme cardiaque chez le receveur.

Il est donc indispensable de rincer soigneusement l'organe avant sa vascularisation pour éliminer l'excès de potassium résiduel dans le greffon, et aussi tous les produits de dégradation du métabolisme cellulaire qui se sont accumulés durant la période de conservation et qui vont participer à la mise en jeu de la cascade évènementielle conduisant aux lésions de reperfusion.

On connaît du document US-A-5 145 771, une solution de conservation et de rinçage d'organe et tissus dénommée « Carolina rinse ». Cette solution est à base d'adénosine et contient en outre sodium, calcium, magnésium et moins de 6MEQ/L de potassium.

Le document EP-A-713 363 décrit une amélioration de la solution précédente en ce qu'elle contient en outre de la glycine.

Le document EP-A-1 178 726 décrit quant à lui une solution de conservation d'organe du type extracellulaire contenant du calcium et du PEG de poids moléculaire égal à 35 000. Il n'est pas envisagé d'utiliser la solution pour le rinçage. Par ailleurs, les concentrations décrites de PEG sont comprises entre 0,01 et 5 millimoles par litre, soit entre 0.35 g/l et 175g/l. Les valeurs préférées sont inférieures à 1 millimole (35 g/l), avantageusement égale à 0,03 millimole/litre, soit 1 g/l. De même, la concentration en potassium dans la formulation décrite est comprise entre 10 et 40 millimoles.

Le problème que se propose de résoudre l'invention est de mettre au point une nouvelle solution de rinçage permettant d'optimiser la phase de réchauffement du greffon durant son implantation chez le receveur, lorsqu'elle est utilisée après conservation froide et avant revascularisation.

Le Demandeur a constaté que de manière toute à fait surprenante, la mise en oeuvre d'une concentration en PEG de poids moléculaire égal à 35 000 au moins 4 fois supérieure à la concentration avantageuse décrite dans le document EP-A-1 178 726 combiné à une faible concentration de potassium permettait de rendre la solution de conservation décrite utilisable pour le rinçage d'organe.

En d'autres termes, l'invention a pour objet une solution de rinçage d'organes ou de tissus du type extracellulaire, comprenant du calcium, du PEG de poids moléculaire 35000 à une concentration d'au moins 4 g/l, avantageusement 5 g/l et du potassium, à une concentration supérieure ou égale à 1 mmol/L, mais inférieure à 10 mmol/L.

La solution est du type extracellulaire en ce qu'elle contient plus de Na+ que de K+.

Selon, une autre caractéristique, la concentration en calcium est comprise entre 0,1 et 2, avantageusement égale à 1,3 mmol/L.

Dans un mode de réalisation préféré, la solution de rinçage de l'invention contient du sodium à une concentration comprise entre 10 et 150, avantageusement égale à 20 mmol/L.

La solution de rinçage de l'invention contient du potassium, à une concentration comprise entre 1 et 9, avantageusement égale à 5 mmol/L.

La solution de rinçage de l'invention contient en outre avantageusement :
- du raffinose pentahydraté à une concentration comprise entre 20 et 40, avantageusement égale à 30 mmol/L,
- du lactabionate à une concentration comprise entre 70 et 140, avantageusement égale à 100 mmol/L.

Par ailleurs, le pH de la solution de rinçage de l'invention est avantageusement compris entre 6,5 et 8, de préférence égal à 7,4.

L'osmolarité de la solution est quant à elle comprise entre 290 et 330, avantageusement égale à 320 mosm/kg.

Dans un mode de réalisation préféré, la composition de la solution de rinçage de l'invention est la suivante :

| | |
|---|---|
| CaCl₂, 2H₂O (mmol/L) | 1,3 |
| KH₂PO₄ (mmol/L) | 5 |
| NaH₂PO₄ (mmol/L) | 20 |
| MgSO₄, 7H₂O (mmol/L) | 5 |
| Lactobionate (mmol/L) | 100 |
| Raffinose (mmol/L) | 30 |
| PEG (PM 35 000) (g/l) | 5 |
| pH | 7,4 |
| osmolarité (mosm/kg) | 320 |

L'invention a également pour objet un procédé de rinçage d'organe ou tissus avant implantation chez le patient, selon lequel on rince l'organe ou le tissu avec la solution décrite ci-dessus.

L'invention et les avantages qui en découlent ressortiront bien des exemples de réalisation suivants, à l'appui des figures annexées.
La figure 1 est une représentation graphique de la production de bile d'un foie reperfusé et préalablement lavé avec la solution de l'invention.
La figure 2 est une représentation graphique de la résistance vasculaire d'un foie reperfusé et préalablement lavé avec la solution de l'invention.
La figure 3 est une représentation graphique de l'activité de la nitrite oxyde synthétase endothéliale (e NOS) d'un foie reperfusé et préalablement lavé avec la solution de l'invention.
La figure 4 est une représentation graphique de la peroxidation lipidique d'un foie reperfusé et préalablement lavé avec la solution de l'invention.
La figure 5 est une représentation graphique de la production de HSP cytoprotectrices (Heat Shock Protein) induite par un foie reperfusé et préalablement lavé avec la solution de l'invention.
La figure 6 est une représentation graphique du dosage de l'AMP kinase phosphorylée dans un rein transplanté préalablement lavé avec la solution de l'invention.
La figure 7 est une représentation graphique du dosage de la NO synthétase endothéliale dans un rein transplanté préalablement lavé avec la solution de l'invention.
La figure 8 est une représentation graphique du dosage du malondialdéhyde dans un rein transplanté préalablement lavé avec la solution de l'invention.
La figure 9 est une représentation graphique du dosage de la superoxyde dismutase et de la gluthatione dismutase dans un rein transplanté préalablement lavé avec la solution de l'invention.
La figure 10 est une représentation graphique du dosage de l'hème oxygénase-1 dans un rein transplanté préalablement lavé avec la solution de l'invention.
La figure 11 est une représentation graphique du dosage de l'Activating transcription factor-6 (ATF-6) dans un rein transplanté préalablement lavé avec la solution de l'invention.
La figure 12 est une représentation graphique du dosage de la Phosphorylated and total protein Kinase RNA-like endoplasmic reticulum kinase (p-PERK) dans un rein transplanté préalablement lavé avec la solution de l'invention.
La figure 13 est une représentation graphique du dosage de la X-box binding protein-1 (XBP-1) dans un rein transplanté préalablement lavé avec la solution de l'invention.
La figure 14 est une représentation graphique du dosage de la Caspase-12 (Casp 12) dans un rein transplanté préalablement lavé avec la solution de l'invention.

### 1/ Préparation de la solution de rinçage de l'invention

On prépare une solution de composition et caractéristiques suivantes par mélange des ingrédients (pour 1 litre) :

| | |
|---|---|
| CaCl₂, 2H₂O (mmol/L) | 1,3 |
| KH₂PO₄ (mmol/L) | 5 |
| NaH₂PO₄ (mmol/L) | 20 |
| MgSO₄, 7H₂O (mmol/L) | 5 |
| Lactobionate (mmol/L) | 100 |
| Raffinose (mmol/L) | 30 |
| PEG 35 M (g/l) | 5 |
| pH | 7,4 |
| osmolarité (mosm/kg) | 320 |

Dans le point 2/ et les figures correspondantes, cette solution est désignée SB PEG 5.

### 2/ Cas du foie in vivo

### a/ Préparation des solutions

En plus de la solution de rinçage de l'invention, on prépare les trois solutions suivantes :

**SB PEG 1 (pour 1 litre)**

| | |
|---|---|
| CaCl₂, 2H₂O (mmol/L) | 1,3 |
| KH₂PO₄ (mmol/L) | 5 |
| NaH₂PO₄ (mmol/L) | 20 |
| MgSO₄, 7H₂O (mmol/L) | 5 |
| Lactobionate (mmol/L) | 100 |
| Raffinose (mmol/L) | 30 |
| PEG 35 M (g/l) | 1 |
| pH | 7,4 |
| osmolarité (mosm/kg) | 320 |

**SB (pour 1 litre)**

| | |
|---|---|
| CaCl₂, 2H₂O (mmol/L) | 1,3 |
| KH₂PO₄ (mmol/L) | 5 |
| NaH₂PO₄ (mmol/L) | 20 |
| MgSO₄, 7H₂O (mmol/L) | 5 |
| Lactobionate (mmol/L) | 100 |
| Raffinose (mmol/L) | 30 |
| pH | 7,4 |
| osmolarité (mosm/kg) | 320 |

**RLS (Ringer Lactate Solution)**

| | |
|---|---|
| Pour 100 ml : | |
| Chlorure de sodium | 600 mg |
| Chlorure de potassium | 40 mg |
| Chlorure de calcium | 27 mg |
| Lactate de sodium | 312 mg |
| osmolarité (mosm/l) | 277 |
| pH | 5à7 |

### b/ Conditions expérimentales

Le foie est prélevé et lavé avec une solution UW (50 ml) à 4°C. L'organe est ensuite conservé de manière statique dans la même solution UW (100 ml) pendant 24h à 4°C. Le foie est ensuite lavé par chacune des 4 solutions précédentes. Les différents paramètres sont ensuite mesurés sur le foie reperfusé dans des conditions normales de température à 37°C pendant 2h.

### c/ Production de bile

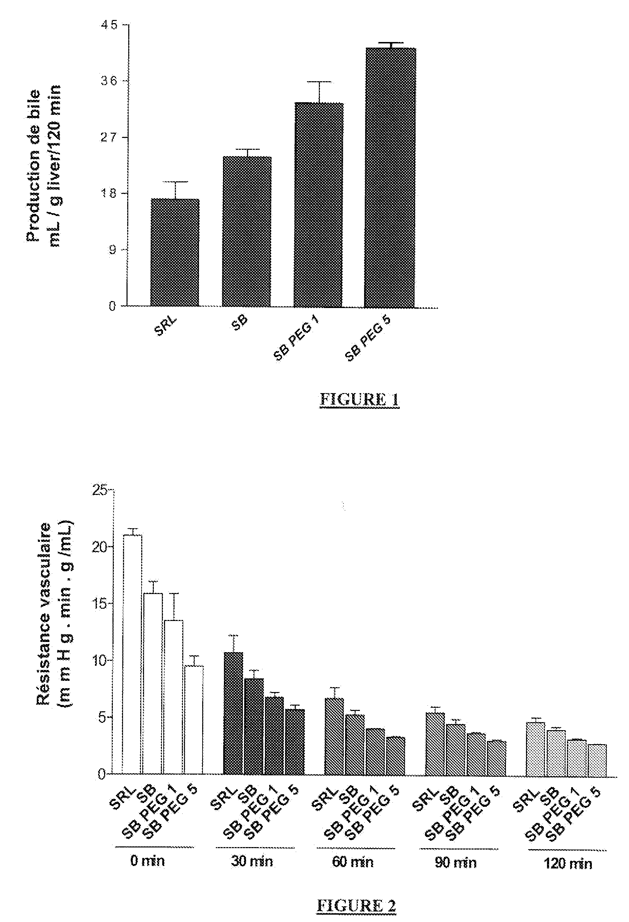

Comme le montre la figure 1, la production de bile après 120 minutes de reperfusion est améliorée lorsque le foie est préalablement rincé avec la solution de l'invention (SB PEG 5) par rapport aux solutions de l'art antérieur.

### d/ Résistance vasculaire

Comme le montre la figure 2, la présence de PEG à 5 g/l dans la solution de l'invention permet de diminuer la résistance vasculaire au regard de la même solution contenant du PEG à raison de 1 g/l.

### e/ Protection de l'endothélium

### - e NOS

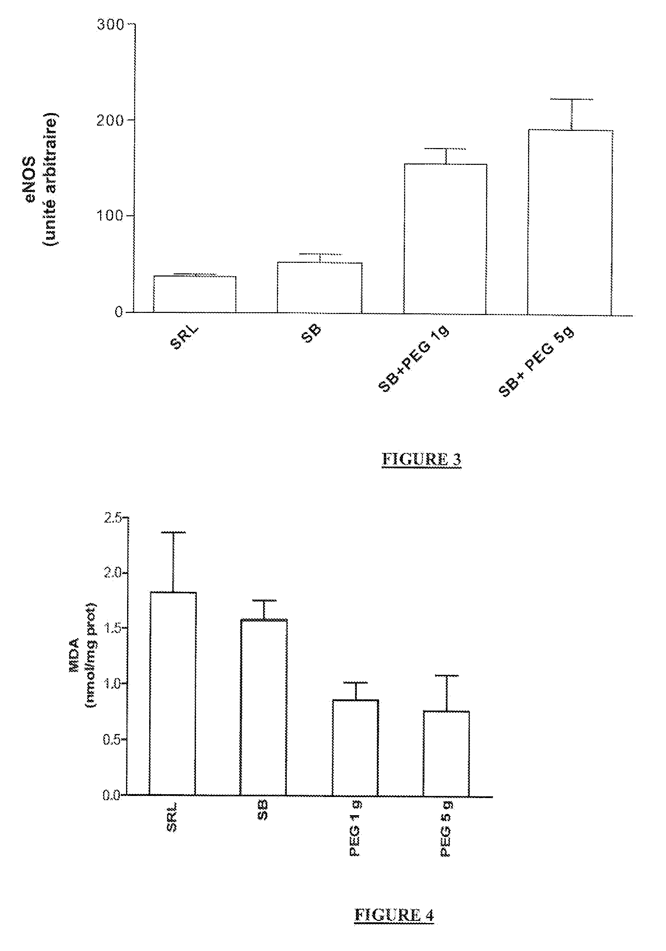

Comme le montre la figure 3, la solution de rinçage de l'invention permet d'améliorer l'activité de la nitrite oxyde synthétase endothéliale (e NOS).

### - Peroxydation des lipides

Comme le montre la figure 4, la solution de rinçage de l'invention permet de légèrement diminuer la peroxydation des lipides et donc d'améliorer la conservation de l'endothélium. Elle n'a pas d'effet préjudiciable.

### f/ Production de HSP cytoprotectrices (Heat Shock Protein)

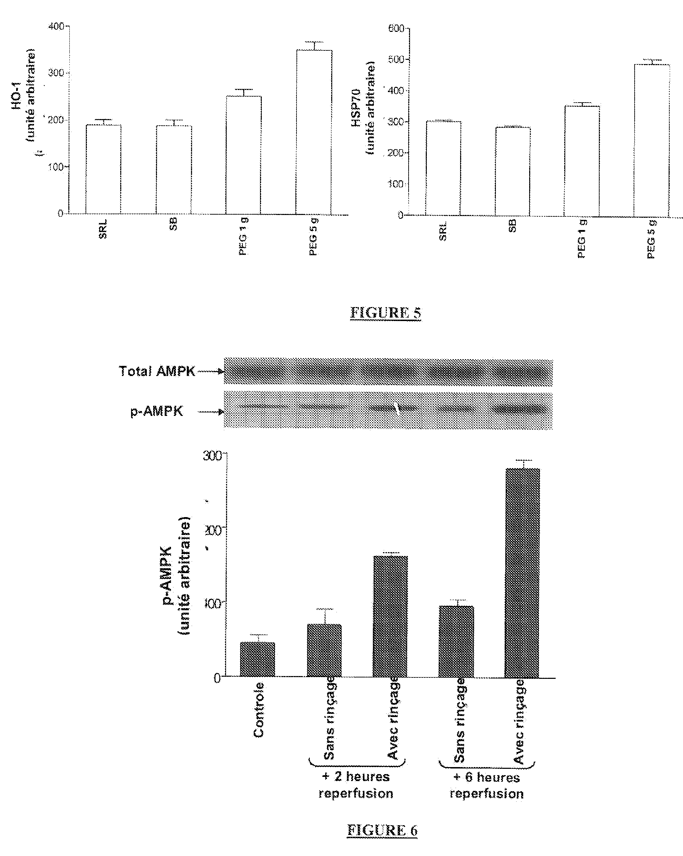

Comme le montre la figure 5, la production de HSP cytoprotectrices (Hème Oxygénase-1 et HSP 70) est induite par la présense du PEG35. L'effet est encore plus évident à 5 g/l de PEG.

### 3/ Cas du rein, expériences in vivo

On utilise des rats Wistar de poids compris entre 180 et 280 g, ayant libre accès à la nourriture et à l'eau. L'étude est réalisée sur 25 rats repartis par tirage au sort en 5 groupes expérimentaux :
→ *Groupe contrôle:* des rats non greffés sont utilisés pour l'établissement des paramètres physiologiques.
→ *Groupe sans rinçage 2h:* les greffons rénaux ne sont pas rincés avant leur implantation chez le receveur, ils sont revascularisés pendant 2h après la greffe.
→ *Groupe sans rinçage 6h:* les greffons rénaux ne sont pas rincés avant leur implantation chez le receveur, ils sont revascularisés pendant 6h après la greffe.
→ *Groupe avec rinçage 2h:* les reins sont rincés avant la transplantation et sont revascularisés pendant 2h après la greffe.
→ *Groupe avec rinçage 6h:* les reins sont rincés avant la transplantation et sont revascularisés pendant 6 h après la greffe.

Après leurs prélèvements, les reins de tous les groupes, excepté ceux du groupe contrôle, sont conservés dans la solution UW à 4°C pendant 18h. Ils sont, par la suite, greffés chez des animaux receveurs.

La solution de rinçage utilisée est celle de l'invention décrite précédemment.

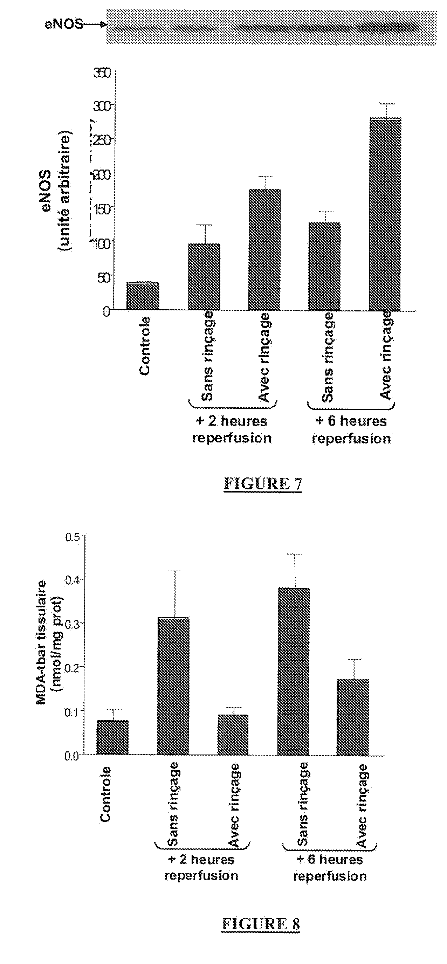

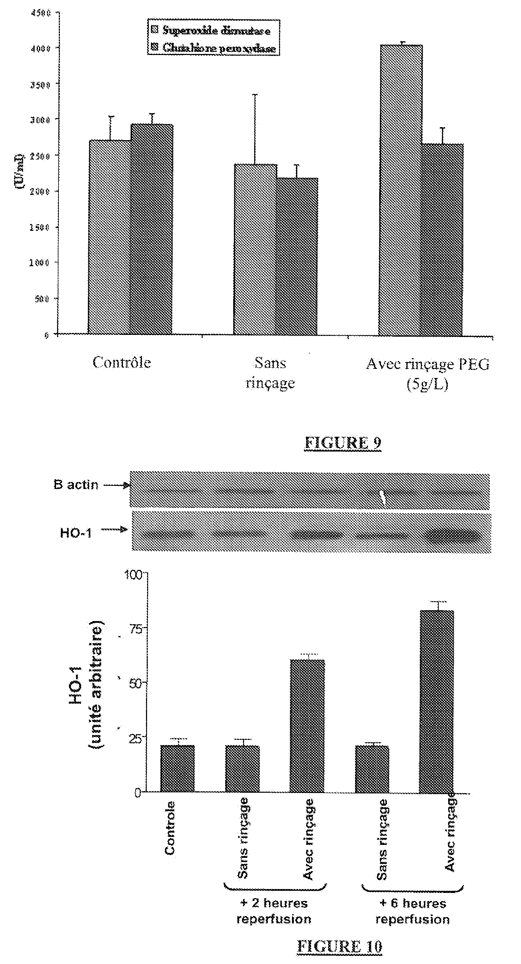

Les reins greffés sont prélevés et conservés à -20°C. Les tissus sont utilisés pour effectuer les dosages suivants :
a/ l'AMP kinase phosphorylée (p-AMPk, une enzyme impliquée dans le métabolisme énergétique) (figure 6)
   Le profil électrophorétique montre le même taux d'AMPk totale pour tous les groupes expérimentaux. Cependant, c'est le taux de phosphorylation de cette enzyme qui varie selon les conditions expérimentales. Les deux groupes sans rinçage ne présentent pas de différence statistiquement significative versus le groupe contrôle. En revanche, on remarque que le rinçage augmente significativement (p<0,05) la phosphorylation de l'AMPK par rapport au non rinçage.
b/ la NO synthétase endothéliale (eNOS, une enzyme constitutive impliquée dans la synthèse du NO) (figure 7)
   L'étude de l'effet du rinçage sur la monoxyde d'azote synthétase endothéliale se fait par rapport à la β-actine. C'est une protéine dont la concentration ne varie pas entre les échantillons. Elle peut servir alors de contrôle interne. On peut remarquer que la monoxyde d'azote synthétase endothéliale augmente sous l'effet du rinçage et de la durée de la reperfusion. L'analyse statistique prouve une différence significative (p<0,05) entre les groupes avec rinçage 2h et 6h, d'une part, et le groupe contrôle, d'autre part. En outre, après 6h de reperfusion, la monoxyde d'azote synthétase endothéliale est plus élevée dans le groupe avec rinçage versus le groupe sans rinçage (p<0,05).
c/ diminution du stress oxydatif
   - dosage du malondialdéhyde (MDA-tbar, un produit de la péroxydation lipidique) (figure 8)
      On remarque que les concentrations les plus élevées de MDA-tbar sont rencontrées dans les groupes sans rinçage 2h et 6h. Le rinçage des reins avant leur transplantation permet une réduction significative (p<0,05) de la péroxydation lipidique par rapport au groupe sans rinçage.
   - dosage de la superoxyde dismutase et de la glutathione dismutase (figure 9)
      Comme le montre la figure 9, les concentrations de superoxyde dismutase et de glutathione dismutase augmentent dans le rein transplanté ayant été rincé par la solution de l'invention ce qui caractérise une diminution du stress oxydatif.
d/ protéine HSP : hème oxygénase-1 (HO-1) (Figure 10)
   La variation de l'hème oxygénase-1 entre les différents groupes est évaluée par rapport à la β-actine. Dans les deux groupes sans rinçage, la présence de l'hème oxygénase-1 est moins importante (p<0,05) par rapport à celle mesurée dans les groupes avec rinçage aux différents temps. La production de HSP cytoprotectrice (Hème Oxygénase-1) est induite par la présence du PEG35 à 5 g/l.
e/ marqueurs du stress du réticulum endoplasmique
   Le réticulum endoplasmique est un organite intracellulaire de structure complexe qui forme un réseau membraneux s'étendant du noyau à la membrane cellulaire. Il constitue un environnement optimal à la maturation et à l'assemblage des protéines natives. Au cours de ce processus, des contrôles de qualité surviennent au niveau transcriptionnel, traductionnel et conformationnel. Les protéines nouvellement synthétisées doivent être parfaitement repliées afin d'acquérir leur fonctionnalité.

Une des conséquences d'une ischémie ou d'un stress oxydatif est un dérèglement des processus de maturation et de repliement des protéines dans le réticulum endoplasmique. Dans ces conditions, elles ne seront pas transportées à leur destination finale dans la cellule et seront éventuellement dégradées par les protéasomes. Toutefois, lorsqu'elles sont produites en excès, les protéines mal conformées ne pourront pas être toutes dégradées et finiront par s'accumuler dans la lumière du réticulum endoplasmique. Cette situation induit un stress au niveau du réticulum endoplasmique, conduisant la cellule à activer une réponse adaptative particulière appelée UPR (pour « Unfolded Protein Response »). Cette réponse est caractérisée par une réduction globale de la synthèse protéique par blocage traductionnel, une augmentation de l'activité de dégradation protéasomale et une augmentation des capacités enzymatiques de maturation protéique. Cependant, si ce processus adaptatif échoue et que le stress se prolonge, la cellule active alors les voies induisant la mort cellulaire programmée.

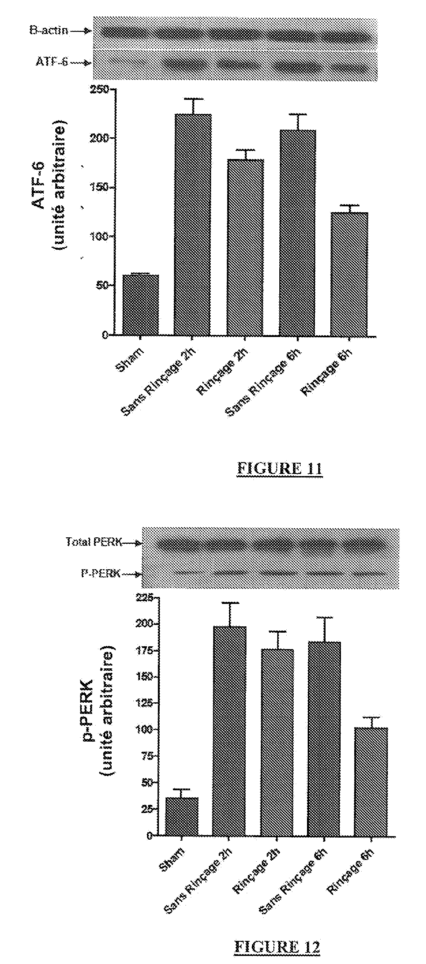

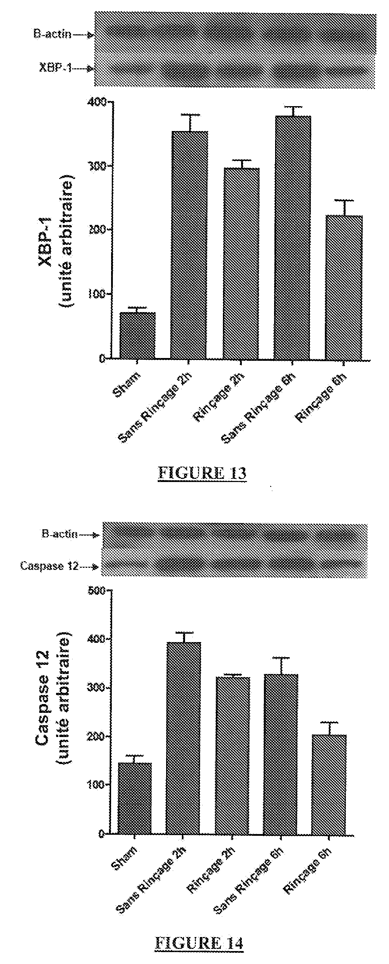

Des prélèvements de tissu après 2h et 6h de revascularisation du greffon sont effectués pour le dosage des marqueurs suivants :
- Activating transcription factor-6 (ATF-6) (figure 10)
- Phosphorylated and total protein Kinase RNA-like endoplasmic reticulum kinase (p-PERK) (figure 11)
- X-box binding protein-1 (XBP-1) (figure 12)
- Caspase-12 (Casp 12) (figure 13)
On remarque que les médiateurs les plus élevés de la réponse UPR sont rencontrés dans les groupes sans rinçage 2h et 6h en comparaison avec les groupes rinçage (p<0,05). Le rinçage des reins avant leur transplantation permet une réduction significative du stress du réticulum endoplasmique.

La caspase 12 est un activateur de l'apoptose à la suite d'un stress du réticulum endoplasmique. On trouve que la caspase 12 est plus activée dans les groupes sans rinçage par rapport aux groupes rinçage (p>0,05).

En résumé, les résultats montrent que le rinçage du greffon rénal après préservation froide entraîne :
→ Une activation de la monoxyde d'azote synthétase endothéliale et une libération accrue de monoxyde d'azote
→ Une augmentation de la phosphorylation de l'AMPk
→ Une augmentation des capacités antioxydantes (HO-1 et SOD) et une diminution de la péroxydation des lipides (MDA)
→ Une diminution du stress au niveau du réticulum endoplasmique

## Revendications

1. Solution de rinçage d'organes ou de tissus du type extracellulaire, comprenant du calcium, du PEG de poids moléculaire 35000 à une concentration d'au moins 4 g/l et du potassium, à une concentration comprise entre 1 et 9 mmol/L.

2. Solution de rinçage selon la revendication 1, **caractérisée en ce que** la concentration en PEG est de 5 g/l.

3. Solution de rinçage selon la revendication 1, **caractérisée en ce que** la concentration en calcium est comprise entre 0,1 et 2.

4. Solution de rinçage selon la revendication 1, **caractérisée en ce qu'**elle contient en outre du sodium à une concentration comprise entre 10 et 150.

5. Solution de rinçage selon la revendication 1, **caractérisée en ce que** la concentration en potassium, est égale à 5 mmol/L.

6. Solution de rinçage selon la revendication 1, **caractérisée en ce qu'**elle contient en outre:
- du raffinose pentahydraté à une concentration comprise entre 20 et 40,
- du lactabionate à une concentration comprise entre 70 et 140.

7. Solution de rinçage selon la revendication 1, **caractérisée en ce que** le pH est compris entre 6, 5 et 8.

8. Solution de rinçage selon la revendication 1, **caractérisée en ce que** l'osmolarité est comprise entre 290 et 330.

9. Solution de rinçage selon la revendication 1, **caractérisée en ce qu'**elle a la composition suivante :
| | |
|---|---|
| CaCl₂, 2H20 (mmol/L) | 1,3 |
| KH2PO4 (mmol/L) | 5 |
| NaH2PO4 (mmol/L) | 20 |
| MgSO4, 7H20 (mmol/L) | 5 |
| Lactobionate (mmol/L) | 100 |
| Raffinose (mmol/L) | 30 |
| PEG (PM 35 000) (g/l) | 5 |
| pH | 7,4 |
| osmolarité (mosm/kg) | 320 |

10. Procédé de rinçage d'organes ou tissus avant implantation chez un patient, selon lequel on rince l'organe ou le tissu avec la solution objet de l'une des revendications 1 à 9.

## Patentansprüche

1. Organ- oder Gewebespüllösung vom extrazellulären Typ, die Kalzium, PEG mit einem Molekulargewicht von 35.000 in einer Konzentration von wenigstens 4 g/l und Kalium in einer Konzentration von 1 und 9 mml/l umfasst.

2. Spüllösung gemäß Anspruch 1, **dadurch gekennzeichnet, dass** die Konzentration an PEG 5 g/l beträgt.

3. Spüllösung gemäß Anspruch 1, **dadurch gekennzeichnet, dass** die Konzentration an Kalzium zwischen 0,1 und 2 inbegriffen ist.

4. Spüllösung gemäß Anspruch 1, **dadurch gekennzeichnet, dass** sie darüber hinaus Natrium in einer zwischen 10 und 150 inbegriffenen Konzentration enthält.

5. Spüllösung gemäß Anspruch 1, **dadurch gekennzeichnet, dass** die Konzentration an Kalium gleich 5 mmol/l ist.

6. Spüllösung gemäß Anspruch 1, **dadurch gekennzeichnet, dass** sie darüber hinaus:
- Pentahydrat-Raffinose in einer zwischen 20 und 40 inbegriffenen Konzentration
- Laktobionat in einer zwischen 70 und 140 inbegriffenen Konzentration enthält.

7. Spüllösung gemäß Anspruch 1, **dadurch gekennzeichnet, dass** der pH-Wert zwischen 6,5 und 8 inbegriffen ist.

8. Spüllösung gemäß Anspruch 1, **dadurch gekennzeichnet, dass** die Osmolarität zwischen 290 und 330 inbegriffen ist.

9. Spüllösung gemäß Anspruch 1, **dadurch gekennzeichnet, dass** sie die folgende Zusammensetzung enthält:
| | |
|---|---|
| CaCl2, 2H2O (mmol/l) | 1,3 |
| KH2PO4 (mmol/l) | 5 |
| NaH2PO4 (mmol/l) | 20 |
| MgSO4, 7H2O (mmol/l) | 5 |
| Laktobionat (mmol/l) | 100 |
| Raffinose (mmol/l) | 30 |
| PEG (PM 35.000) (g/l) | 5 |
| Ph | 7,4 |
| Osmolarität (mosm/kg) | 320 |

10. Organ- oder Gewebespülverfahren vor der Implantation bei einem Patienten, gemäß dem das Organ oder das Gewebe mit der Lösung gespült wird, die Gegenstand von einem der Ansprüche 1 bis 9 ist.

## Claims

1. An extracellular-like rinsing solution for organs or tissues, containing calcium, PEG of molecular weight 35,000 at a concentration of at least 4 g/l, and potassium, at a concentration comprised between 1 and 9 mmol/L.

2. Rinsing solution according to claim 1, **characterised in that** the PEG concentration is 5 g/l.

3. Rinsing solution according to claim 1, **characterised in that** the calcium concentration ranges between 0.1 and 2.

4. Rinsing solution according to claim 1, **characterised in that** it also contains sodium at a concentration ranging between 10 and 150.

5. Rinsing solution according to claim 1, **characterised in that** the potassium concentration is equal to 5 mmol/L.

6. Rinsing solution according to claim 1, **characterised in that** it further contains:
- raffinose pentahydrate at a concentration ranging between 20 and 40 mmol/L.
- lactabionate at a concentration ranging between 70 and 140 mmol/L.

7. Rinsing solution according to claim 1, **characterised in that** the pH ranges between 6.5 and 8.

8. Rinsing solution according to claim 1, **characterised in that** the osmolarity ranges between 290 and 330 mosm/kg.

9. Rinsing solution according to claim 1, **characterised in that** it has the following composition:
| | |
|---|---|
| CaCl₂, 2H₂O (mmol/L) | 1.3 |
| KH₂PO₄ (mmol/L) | 5 |
| NaH₂PO₄ (mmol/L) | 20 |
| MgSO₄, 7H₂O (mmol/L) | 5 |
| Lactobionate (mmol/L) | 100 |
| Raffinose (mmol/L) | 30 |
| PEG (PM 35,000) (g/l) | 5 |
| pH | 7.4 |
| osmolarity (mosm/kg) | 320 |

10. Method for the rinsing of organs or tissues prior to implantation in a patient, wherein the organ or tissue is rinsed with the solution according to one of the claims 1 to 9.
